(19) Europäisches Patentamt
European Patent Office
Office européen des brevets

(11) EP 4 663 680 A1

(12) **EUROPEAN PATENT APPLICATION**

(43) Date of publication:
**17.12.2025 Bulletin 2025/51**

(21) Application number: **25181632.8**

(22) Date of filing: **10.06.2025**

(51) International Patent Classification (IPC):
***C08G 59/62*** *(2006.01)* ***C08G 77/14*** *(2006.01)*

(52) Cooperative Patent Classification (CPC):
(C-Sets available)
**C08G 59/621; C08G 77/14** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.06.2024 JP 2024096847**

(71) Applicant: **Shin-Etsu Chemical Co., Ltd.**
**Tokyo 100-0005 (JP)**

(72) Inventors:
- **Kawamura, Norifumi**
  **Gunma, 3790224 (JP)**
- **Osada, Shoichi**
  **Gunma, 3790224 (JP)**
- **Horigome, Hiroki**
  **Gunma, 3790224 (JP)**
- **Hagiwara, Kenji**
  **Gunma, 3790224 (JP)**
- **Yokota, Ryuhei**
  **Gunma, 3790224 (JP)**
- **Tomita, Tadashi**
  **Gunma, 3790224 (JP)**

(74) Representative: **Angerhausen, Christoph**
**Boehmert & Boehmert**
**Anwaltspartnerschaft mbB**
**Pettenkoferstrasse 22**
**80336 München (DE)**

(54) **MOTOR-SEALING RESIN COMPOSITION**

(57) A motor-sealing resin composition for sealing a part or the whole of parts constituting a motor, comprising: (A) an epoxy resin, (B) a hydrosilylation reaction product of an alkenyl group-containing epoxy compound and an organopolysiloxane including one or more hydrosilyl groups in one molecule, (C) a phenolic curing agent, (D) a black pigment, and (E) an inorganic filling material with the proviso that the black pigment (D) is excluded.

FIG.1A

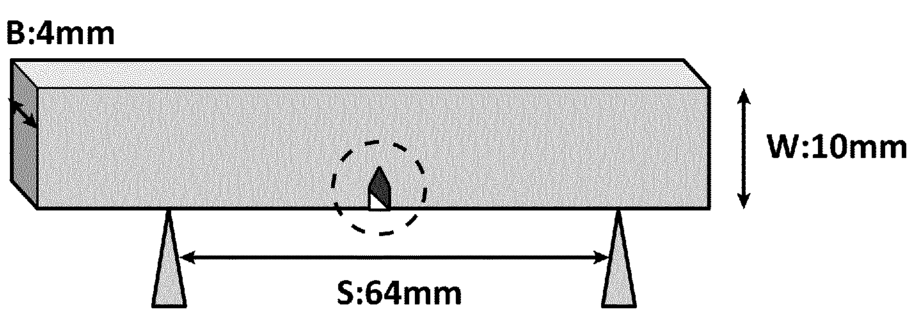




Processed by Luminess, 75001 PARIS (FR)

(Cont. next page)

(52) Cooperative Patent Classification (CPC): (Cont.)

C-Sets
**C08L 63/00, C08L 83/06, C08K 3/04, C08K 3/22;**
**C09J 163/00, C08L 83/06, C08K 3/04, C08K 3/22**

## Description

BACKGROUND OF THE INVENTION

Field of the invention

The present invention relates to a motor-sealing resin composition.

Background art

In recent years, in a wide range of fields including hybrid cars, electric cars, railways, and generators, a large number of motors are used, and demands for miniaturization and high output are increasing. In order to respond to these demands, motor coil occupancy is increased, and measures to prevent heat generation of motors are being considered.

As resins to be used for immersing or sealing coils, epoxy resins are suitably used because they also have mechanically excellent characteristics, in addition to their good thermal resistance and chemical resistance.

As a highly thermoconductive resin, a composition of an epoxy resin using aluminum oxide as a highly thermoconductive inorganic filling material is known (JP-A-2021-013034). For the purpose of improving the thermal conductivity, a composition using boron nitride or magnesium oxide as a highly thermoconductive inorganic filling material is known (JP-A-2021-031600 and JP-A-2020-117688).

However, there is a disadvantage that when a large amount of a thermoconductive inorganic filling material is blended in a composition for improving the thermal conductivity, the elastic modulus of the cured material of the composition increases, and the cured material cannot withstand stress changes during a temperature cycling test to cause cracking.

SUMMARY OF THE INVENTION

Accordingly, it is an object of the present invention to provide a motor-sealing resin composition that is suitable for sealing a part or the whole of the parts constituting a motor. Specifically, it is an object to provide a resin composition that becomes a cured material having a low elastic modulus and excellent thermal resistance even if the resin composition contains a large amount of an inorganic filling material.

The present inventors have diligently studied to solve the above problems and, as a result, have found that the following motor-sealing resin composition can achieve the above object, and the present invention has been accomplished.

That is, the present invention provides the following motor-sealing resin composition.

<1> A motor-sealing resin composition for sealing a part or the whole of parts constituting a motor, including the components (A), (B), (C), (D), and (E) defined as:

(A) an epoxy resin in an amount of 20 to 60 parts by mass with respect to the total 100 parts by mass of the components (A), (B) and (C);

(B) a hydrosilylation reaction product of an alkenyl group-containing epoxy compound and any one of organopolysiloxanes represented by formulae (1) to (3), as defined below, and having one or more hydrosilyl groups in one molecule, said hydrosilylation reaction product (B) being in an amount of 2 to 25 parts by mass with respect to the total 100 parts by mass of the components (A), (B), and (C);

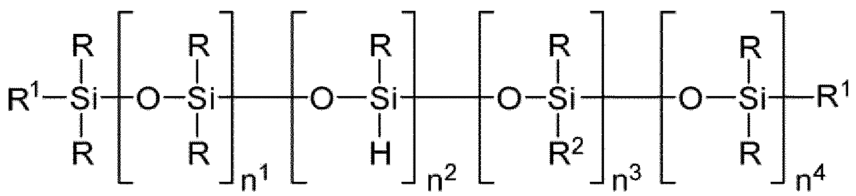

(1)

wherein, in formula (1), Rs are independently a monovalent hydrocarbon group having 1 to 10 carbon atoms, $R^1$s are independently a hydrogen atom or a monovalent hydrocarbon group having 1 to 10 carbon atoms, $R^2$s are independently a group represented by formula (1') as defined below, $n^1$ is a number from 5 to 200, $n^2$ is a number from 0 to 2, $n^3$ is a number from 0 to 10, and $n^4$ is 0 or 1, provided that one or more of $R^1$s are hydrogen atoms,

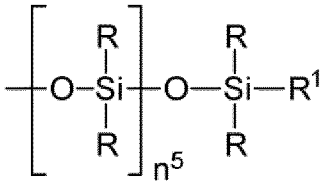

(1')

wherein, in formula (1'), Rs are independently a monovalent hydrocarbon group having 1 to 10 carbon atoms, $R^1$s are independently a hydrogen atom or a monovalent hydrocarbon group having 1 to 10 carbon atoms, and $n^5$ is a number from 1 to 10),

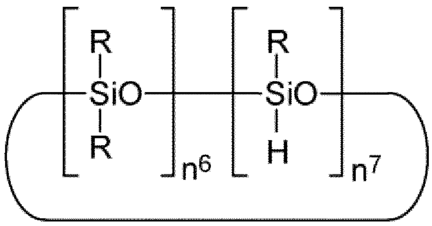

(2)

wherein, in formula (2), Rs are independently a monovalent hydrocarbon group having 1 to 10 carbon atoms, $n^6$ is a number from 1 to 10, and $n^7$ is 1 or 2, provided that $n^6 + n^7$ is a number from 3 to 12,

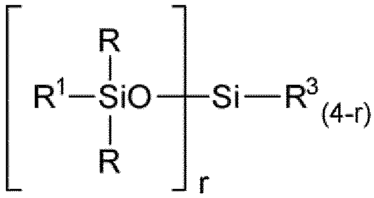

(3)

wherein, in formula (3), Rs are independently a monovalent hydrocarbon group having 1 to 10 carbon atoms, $R^1$s are independently a hydrogen atom or a monovalent hydrocarbon group having 1 to 10 carbon atoms, r is a number from 0 to 3, and $R^3$ is a hydrogen atom or one or more groups selected from the group consisting of alkyl groups having 1 to 110 carbon atoms and alkoxyalkyl groups having 2 to 10 carbon atoms, wherein at least one of $R^1$s and $R^3$ is a hydrogen atom;

(C) a phenolic curing agent in an amount of 20 to 50 parts by mass with respect to the total 100 parts by mass of the components (A), (B), and (C);
(D) a black pigment in an amount of 0.5 parts by mass or more with respect to the total 100 parts by mass of the components (A), (B), and (C); and
(E) an inorganic filling material in an amount of 100 to 2,000 parts by mass with respect to the total 100 parts by mass of the components (A), (B), and (C) with the proviso that the black pigment (D) is excluded from the component (E).

<2> The motor-sealing resin composition according to <1>, wherein the component the inorganic filling material (E) includes one or more selected from the group consisting of alumina, aluminum nitride, boron nitride, magnesium oxide, silicon carbide, silicon nitride, and diamond.

<3> The motor-sealing resin composition according to <1> or <2>, wherein the inorganic filling material (E) has a volume-average particle diameter of 3 to 40 $\mu$m.

<4> The motor-sealing resin composition according to any one of <1> to <3>, wherein the epoxy resin (A)includes one or more selected from the group consisting of a novolac type epoxy resin, an aralkyl type epoxy resin, and a crystalline epoxy resin.

<5> The motor-sealing resin composition according to any one of <1> to <4>, wherein the part constituting the motor is

a rotor.

The motor-sealing resin composition of the present invention has excellent fluidity even if a large amount of an inorganic filling material is contained and is suitable for sealing a part of the whole of parts constituting a motor. The cured material has excellent toughness, low elastic modulus, thermal resistance, and thermal conductivity while maintaining the electrical properties.

BRIEF DESCRIPTION OF THE DRAWINGS

FIG. 1 is a diagram (perspective view) illustrating a three-point bending test piece used when the fracture toughness value ($K_{1C}$) is measured. S shows the distance (64 mm) between supporting points, B shows the width (4 mm) of the test piece, and W shows the thickness (10 mm) of the test piece.

FIG. 2 is an enlarged diagram (partially enlarged view) of the dashed-line portion of the perspective view of FIG. 1. "a" denotes the length (2 mm) of the notch.

DETAILED DESCRIPTION OF THE INVENTION

The present invention will now be described in detail.

[(A) epoxy resin]

Examples of the epoxy resin as the component (A) include epoxy resins that have been used in the technical field of epoxy resin compositions for sealing. Examples of such epoxy resins include novolac type epoxy resins, such as a phenol novolac type epoxy resin, an orthocresol novolac type epoxy resin, and a naphthol novolac type epoxy resin; crystalline epoxy resins, such as a biphenyl type epoxy resin, a bisphenol type epoxy resin, a stilbene type epoxy resin, and a dihydroanthracene diol type epoxy resin; multifunctional epoxy resins, such as a triphenolmethane type epoxy resin and an alkyl-modified triphenolmethane type epoxy resin; aralkyl type epoxy resins, such as a phenol aralkyl type epoxy resin having a phenylene skeleton, a biphenyl aralkyl type epoxy resin having a biphenylene skeleton, a naphthol aralkyl type epoxy resin having a phenylene skeleton, and a naphthol biphenyl aralkyl type epoxy resin having a biphenylene skeleton; naphthol type epoxy resins, such as a dihydroxynaphthalene type epoxy resin and an epoxy resin obtained by glycidyl etherification of a dimer of dihydroxynaphthalene; triazine nucleus-containing epoxy resins, such as triglycidyl isocyanurate and monoallyl diglycidyl isocyanurate; and cyclic hydrocarbon compound-modified phenolic epoxy resins, such as a dicyclopentadiene-modified phenolic epoxy resin, and these resins may be used alone or in combination of two or more. Among these resins, from the viewpoint of moldability, novolac type epoxy resins such as an orthocresol novolac type epoxy resin, aralkyl type epoxy resins such as a biphenyl aralkyl type epoxy resin, and crystalline epoxy resins such as a biphenyl type epoxy resin are preferable, and a biphenyl type epoxy resin is particularly preferable because the viscosity of the composition can be kept low.

The content of the component (A) with respect to the total 100 parts by mass of the components (A) and the components (B) and (C) described later is 20 to 60 parts by mass, preferably 20 to 40 parts by mass.

The total content of the component (A) and the components (B) and (C) described later in the epoxy resin composition for sealing of the present invention is preferably 5 to 20 mass% and more preferably 5 to 10 mass%.

[(B) hydrosilylation reaction product of alkenyl group-containing epoxy compound and organopolysiloxane having one or more hydrosilyl groups in one molecule]

The component (B) is a hydrosilylation reaction product (copolymer) of an alkenyl group-containing epoxy compound and an organopolysiloxane having one or more hydrosilyl groups in one molecule represented by any of the following formulae (1) to (3). The cured material of the composition of the present invention has high thermal resistance and moisture resistance by containing such a copolymer mentioned above.

Organopolysiloxane represented by formula (1):

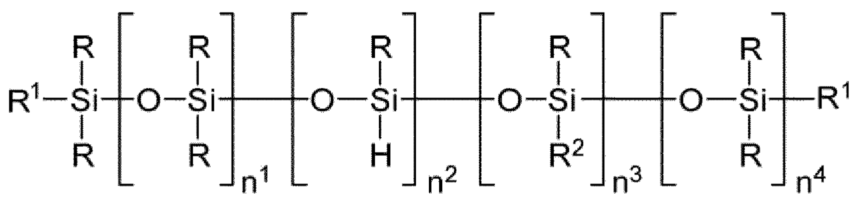

(1)

wherein, in formula (1), Rs are independently a monovalent hydrocarbon group having 1 to 10 carbon atoms, $R^1$s are independently a hydrogen atom or a monovalent hydrocarbon group having 1 to 10 carbon atoms, $R^2$s are independently a group represented by formula (1'), $n^1$ is a number from 5 to 200, $n^2$ is a number from 0 to 2, $n^3$ is a number from 0 to 10, and $n^4$ is 0 or 1, provided that one or more of $R^1$s are hydrogen atoms).

In formula (1), Rs are independently a monovalent hydrocarbon group having 1 to 10, preferably 1 to 6, carbon atoms, and, specifically, examples thereof include alkyl groups, such as a methyl group, an ethyl group, a propyl group, an isopropyl group, a butyl group, an isobutyl group, a tert-butyl group, a pentyl group, a neopentyl group, a hexyl group, an octyl group, a nonyl group, and a decyl group; alkenyl groups, such as a vinyl group, an allyl group, a propenyl group, an isopropenyl group, a butenyl group, a hexenyl group, a cyclohexenyl group, and an octenyl group; aryl groups, such as a phenyl group, a tolyl group, a xylyl group, and a naphthyl group; and aralkyl groups, such as a benzyl group, a phenylethyl group, and a phenylpropyl group. In particular, a methyl group, an ethyl group, and a phenyl group are preferable.

$R^1$s are independently a hydrogen atom or a monovalent hydrocarbon group having 1 to 10, preferably 1 to 6, carbon atoms. Examples of this monovalent hydrocarbon group are the same as those exemplified for R. $R^2$ is a group represented by formula (1') below.

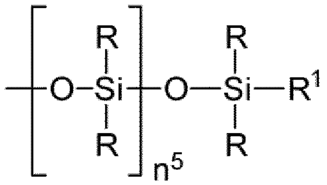

(1')

wherein, in formula (1'), Rs are independently a monovalent hydrocarbon group having 1 to 10 carbon atoms, $R^1$s are independently a hydrogen atom or a monovalent hydrocarbon group having 1 to 10 carbon atoms, and $n^5$ is a number from 1 to 10).

In formula (1), $n^1$ is a number from 5 to 200 and preferably from 10 to 100, $n^2$ is a number from 0 to 2 and preferably 0 or 1, $n^3$ is a number from 0 to 10 and preferably from 0 to 2, and $n^4$ is 0 or 1 and preferably 1.

One or more, preferably 1 or 2, of $R^1$s in formula (1) are hydrogen atoms. In particular, when $n^2 = 0$, one or more, preferably from 1 to 3, of $R^1$s are hydrogen atoms.

In formula (1'), R and $R^1$ are the same as above, and $n^5$ is a number from 1 to 10, preferably from 1 to 6.

Organopolysiloxane represented by formula (2):

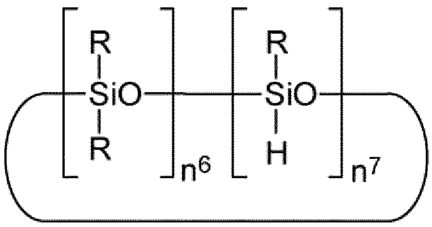

(2)

wherein, in formula (2), Rs are independently a monovalent hydrocarbon group having 1 to 10 carbon atoms, $n^6$ is a number from 1 to 10, and $n^7$ is 1 or 2, provided that $n^6 + n^7$ is a number from 3 to 12).

In formula (2), R is the same as the above, $n^6$ is a number from 1 to 10 and preferably from 4 to 8, and $n^7$ is 1 or 2 and preferably 2, provided that $n^6 + n^7$ is a number from 3 to 12 and preferably from 3 to 8.

Organopolysiloxane is represented by formula (3):

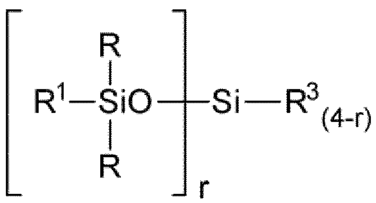

(3)

wherein, in formula (3), Rs are independently a monovalent hydrocarbon group having 1 to 10 carbon atoms, $R^1$s are independently a hydrogen atom or a monovalent hydrocarbon group having 1 to 10 carbon atoms, r is a number from 0 to 3,

$R^3$ is a hydrogen atom or one or more groups selected from the group consisting of alkyl groups having 1 to 10 carbon atoms and alkoxyalkyl groups having 2 to 10 carbon atoms, and at least one of $R^1$s and $R^3$s is a hydrogen atom).

In formula (3), R and $R^1$ are the same as above, r is a number from 0 to 3 and preferably 2 or 3, $R^3$ is a hydrogen atom or one or more groups selected from the group consisting of alkyl groups and alkoxyalkyl groups having 2 to 10 carbon atoms, and at least one of $R^1$s and $R^3$s is a hydrogen atom.

As the organopolysiloxane, both ends hydrogen methylpolysiloxane, both ends hydrogen methyl phenyl polysiloxane, and so on are suitable. For example, preferred are the following compounds:

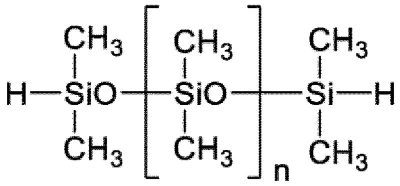

wherein, in the formula, n is a number from 20 to 100 and preferably from 20 to 60); and

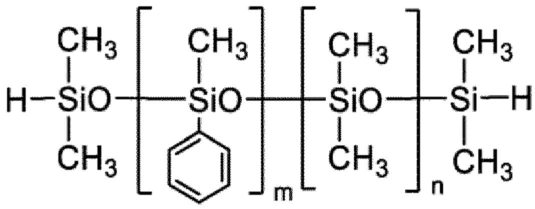

wherein, in the formula, m is a number from 1 to 10 and preferably from 1 to 5, and n is a number from 10 to 100 and preferably from 20 to 60, wherein the bonds of siloxane units put together by m and n may be block or random).

The alkenyl group-containing epoxy compound as the raw material of compound (B) can be obtained by, for example, epoxidation of an alkenyl group-containing phenol resin with epichlorohydrin or partially reacting 2-allylphenol to a known epoxy compound. The epoxy compound can be represented by, for example, the following formula (4) or (5):

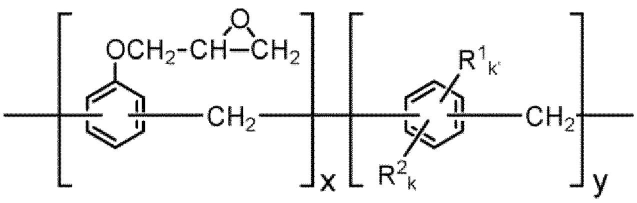

(4)

wherein, in the formula, $R^1$ is an aliphatic monovalent hydrocarbon group including an alkenyl group and having 3 to 15 carbon atoms and preferably 3 to 5 carbon atoms, $R^2$ is a glycidyloxy group or a group represented by $-OCH_2CH(OH)CH_2OR'$, where R' is a monovalent hydrocarbon group including an alkenyl group and having 3 to 10 carbon atoms, preferably 3 to 5 carbon atoms, k is 1, k' is 0 or 1, x is a number from 1 to 30, and y is a number from 1 to 3, wherein the bonds of repeating units put together by x and y may be block or random); and

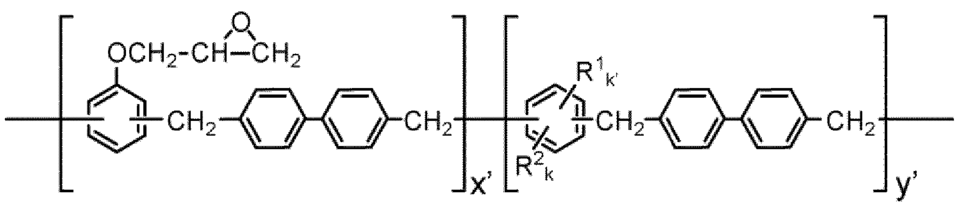

(5)

wherein, in the formula, $R^1$ is an aliphatic monovalent hydrocarbon group including an alkenyl group and having 3 to 15 carbon atoms and preferably 3 to 5 carbon atoms, $R^2$ is a glycidyloxy group or a group represented by $-OCH_2CH(OH)CH_2OR'$, where R' is a monovalent hydrocarbon group including an alkenyl group and having 3 to 10 carbon atoms and preferably 3 to 5 carbon atoms, k is 1, k' is 0 or 1, x' is a number from 1 to 30, and y' is a number from 1 to 3, wherein the bonds of repeating units put together by x' and y' may be block or random).

Examples of the epoxy compound represented by the above formula include the compounds of the following

formula:

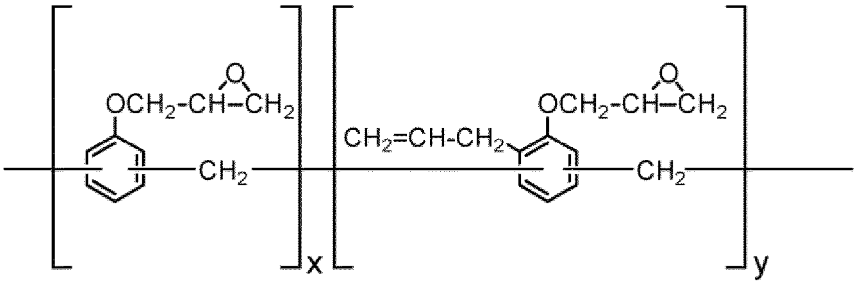

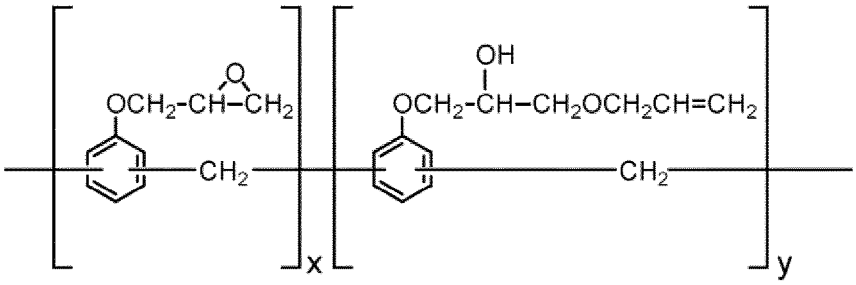

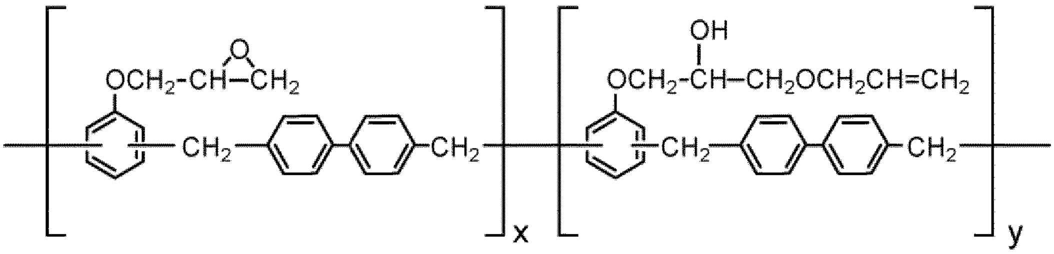

wherein, in the above formula, x and y are numbers shown by $1 \leq x \leq 20$ and $1 \leq y \leq 3$ and preferably $1 \leq x \leq 20$ and $y = 1$. The bonds of repeating units put together by x and y may by block or random).

The component (B) is a hydrosilylation reaction product (copolymer) of the alkenyl group-containing epoxy compound and an organopolysiloxane.

The hydrosilylation reaction may be performed according to a known method. The hydrosilylation reaction may be performed by, for example, a heating reaction in the presence of a platinum-based catalyst such as chloroplatinic acid. The hydrosilyl reaction is preferably carried out, in particular, by heating to 60°C to 120°C in an inert solvent such as benzene, toluene, and methyl isobutyl ketone. The blending proportion of the alkenyl group-containing epoxy compound and the organopolysiloxane is preferably determined such that the number of hydrosilyl group possessed by the organopolysiloxane per one alkenyl group possessed by the alkenyl group-containing epoxy compound is 1.0 or more and preferably from 1.5 to 5.0. The component (B) may be composed of a single copolymer or two or more copolymers.

The amount of the component (B) in the composition is from 2 to 25 parts by mass and preferably from 5 to 15 parts by mass with respect to the total 100 parts by mass of the components (A) and (B) and the component (C) described later.

When the content of the component (B) with respect to the total 100 parts by mass of the components (A) and (B) and the component (C) described later is less than 2 parts by mass, resin leakage or void may occur due to foaming of the resin composition during molding. In addition, the elastic modulus of cured material of the composition increases, and cracking may occur in the cured material. In contrast, when the content of the component (B) with respect to the total 100 parts by mass of the components (A) and (B) and the component (C) described later is greater than 20 parts by mass, the viscosity of the resin composition increases, which may cause molding defects, such as insufficient filling of narrow portions with the resin.

[(C) phenolic curing agent]

Examples of the phenolic curing agent as the component (C) include a phenol novolac resin, a phenol aralkyl resin, a biphenyl aralkyl resin, a triphenylalkane type phenolic resin, and a dicyclopentadiene-modified phenolic resin.

These agents may be used alone or in combination of two or more.

The amount of the component (C) in the composition is from 20 to 50 parts by mass and particularly preferably from 30 to 40 parts by mass with respect to the total 100 parts by mass of the components (A), (B), and (C).

[(D) black pigment]

Examples of the black pigment as the component (D) include, not limited thereto, carbon black, furnace black, and acetylene black, which are used in existing sealing resin compositions, and carbon black is preferable. A semiconductor apparatus manufactured using a black resin composition of the present invention as a semiconductor-sealing material can be provided with good appearance and laser masking property as in semiconductor apparatuses sealed with known epoxy resins and so on.

The amount of the component (D) in the composition is 0.5 parts by mass or more and particularly preferably from 1 to 5 parts by mass with respect to the total 100 parts by mass of the components (A), (B), and (C). An amount of 0.5 parts by mass or more is preferable because the glossiness does not become too high, an appearance defect in which the surface of a semiconductor apparatus is left with traces of semiconductor elements can be suppressed, and sufficiently black color and good laser masking property are obtained.

The average particle diameter of the black pigment as the component (D) is a volume-average particle diameter measured with a laser diffraction particle size distribution analyzer and is preferably from 0.5 to 45 μm and more preferably from 0.5 to 40 μm.

[(E) inorganic filling material]

Examples of the inorganic filling material as the component (E) include materials (excluding the above-described component (D)) such as fused silica, crystalline silica, cristobalite, alumina, silicon nitride, aluminum nitride, boron nitride, titanium oxide, a glass fiber, an alumina fiber, zinc oxide, talc, and calcium carbide. These materials may be used alone or in combination of two or more. Among these materials, in order to express high thermal conductivity, it is preferable to include any one of alumina, aluminum nitride, boron nitride, magnesium oxide, silicon carbide, silicon nitride, and diamond.

The average particle diameter of the inorganic filling material as the component (E) is a volume-average particle diameter measured with a laser diffraction particle size distribution analyzer and is preferably from 3 to 40 μm and more preferably from 10 to 20 μm.

The amount of the component (E) in the composition is preferably from 100 to 2,000 parts by mass and more preferably from 500 to 1,600 parts by mass with respect to the total 100 parts by mass of the components (A), (B), and (C).

When the amount of the component (E) is less than 50 mass% of the whole resin composition, the thermal conductivity of the resin composition is unlikely to be improved, and when the amount is greater than 95 mass%, the viscosity of the composition notably increases, and the moldability may be deteriorated.

From the viewpoint of high fluidity of the resin composition of the present invention, a combination of inorganic filling materials with different particle diameter ranges may be used.

In such a case, a combination of a fine particle size range of from 0.1 to 3 μm and a medium particle size range of from 3 to 10 μm is preferably used.

[Other additives]

The resin composition of the present invention may further contain a curing accelerator, an adhesion-imparting agent, a mold-releasing agent, a flame retardant, an ion-trapping agent, a flexibility-imparting agent, and other additives within a range that does not impair the effects of the present invention.

Examples of the curing accelerator include imidazole compounds (e.g., 2-phenyl-4-methyl-5-hydroxymethylimidazole), an organic phosphorus compound, and 1,8-diazabicyclo(5,4,0) undecene-7.

Examples of the adhesion-imparting agent include epoxy silanes, such as 3-glycidoxypropyltrimethoxysilane, 3-glycidoxypropylmethyldiethoxysilane, and 2-(3,4-epoxycyclohexyl)ethyltrimethoxysilane; aminosilanes, such as N-(2-aminoethyl)-γ-aminopropyltrimethoxysilane, a reaction product of imidazole and 3-glycidoxypropyltrimethoxysilane, 3-aminopropyltriethoxysilane, and N-phenyl-3-aminopropyltrimethoxysilane; and mercaptosilanes, such as 3-mercaptopropyltrimethoxysilane and 3-(thiiranylmethoxy)propyltrimethoxysilane, and these agents may be used alone or in combination of two or more.

Examples of the mold-releasing agent include waxes, such as carnauba wax, rice wax, polyethylene, polyethylene oxide, montanic acid, and ester compounds of montanic acid with saturated alcohol, 2-(2-hydroxyethylamino)-ethanol, ethylene glycol, or glycerin; and stearic acid, stearic acid ester, stearic acid amide, ethylene bisstearic acid amide, and a copolymer of ethylene and vinyl acetate, and they may be used alone or in combination of two or more.

Examples of the flame retardant include a halogenated epoxy resin, a phosphazene compound, a silicone

compound, a zinc molybdate-supporting talc, a zinc molybdate-supporting zinc oxide, aluminum hydroxide, magnesium hydroxide, molybdenum oxide, and antimony oxide. These flame retardants may be used alone or in combination of two or more, but from the viewpoint of environmental load and ensuring fluidity, a phosphazene compound, a zinc molybdate-supporting zinc oxide, and molybdenum oxide are suitably used.

Examples of the ion-trapping agent include a hydrotalcite compound, a bismuth compound, and a zirconium compound, and these agents may be used alone or in combination of two or more.

Examples of the flexibility-imparting agent include silicone compounds, such as silicone oil, a silicone resin, a silicone-modified epoxy resin, and a silicone-modified phenolic resin; and thermoplastic elastomers, such as a styrene resin and an acrylic resin, and these agents may be used alone or in combination of two or more.

The contents of these optional additives in the resin composition may be appropriately determined within a range that allows each additive to exhibit the function well. For example, the content of each additive is in a range of 0.1 parts by mass or more and 10 parts by mass or less with respect to the total 100 parts by mass of the components (A), (B), and (C).

Method for manufacturing composition

The resin composition of the present invention can be manufactured, for example, as follows. That is, the epoxy resin (A), the hydrosilylation reaction product (copolymer) (B) of an alkenyl group-containing epoxy compound and an organopolysiloxane having one or more hydrosilyl groups in one molecule, the phenolic curing agent (C), the black pigment (D), the inorganic filling material (E) (excluding the component (D)), and optional other materials are blended in the respective specified amounts, sufficiently uniformly mixed with a mixer or the like, then subjected to melt mixing treatment with a heat roller, a kneader, an extruder, or the like, and subsequently cooled, solidified, and then pulverized into an appropriate size. The resulting cured material of the composition can be used as a molding material. In addition, it may be used in a tablet shape by further performing tablet making.

WORKING EXAMPLES

The present invention will now be described in more detail by showing examples and comparative examples, but the present invention is not limited to the following examples.

Each component used in examples and comparative examples are as follows.

(A) epoxy resin

- A-1
  Biphenyl type epoxy resin: manufactured by Mitsubishi Chemical Corporation, "YX-4000K" (epoxy equivalent: 195)
- A-2
  Cresol novolac type epoxy resin: manufactured by Nippon Kayaku Co., Ltd., "EOCN1027" (epoxy equivalent: 200)

(B) hydrosilylation reaction product (copolymer) of alkenyl group-containing epoxy compound and organopolysiloxane having one or more hydrosilyl groups in one molecule

Toluene (400 g) and an allyl group-containing epoxy resin (10 g, epoxy equivalent: 310) represented by formula (6) below were put in a 2-L four-necked flask equipped with a reflux condenser, a thermometer, a stirrer, and a dropping funnel, and were subjected to azeotropic dehydration in a nitrogen atmosphere for 2 hours. Subsequently, the temperature in the system was decreased to 80°C, a platinum chloride catalyst (1.00 g) was added thereto, and a solution obtained by dissolving an organic silicon compound (48.5 g) represented by formula (7) below in toluene (194.1 g) was dropwise added thereto over 2 hours. The resulting mixture was stirred for 6 hours while maintaining the temperature in the system at from 90°C to 100°C, and was matured and then cooled to room temperature. Subsequently, the solvent was distilled under a reduced pressure to obtain 56.2 g of a target silicone-modified epoxy resin (compound A, epoxy equivalent: 402).

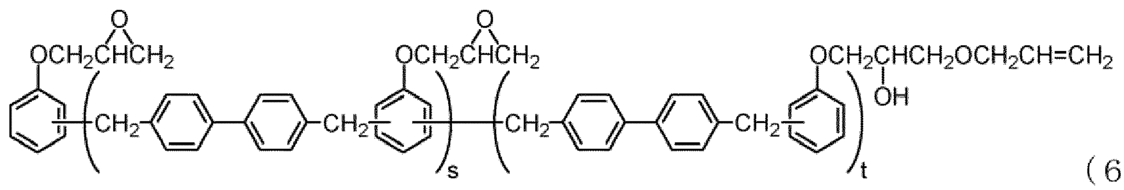

(6)

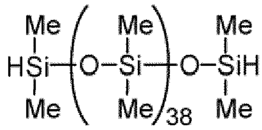

(7)

wherein, in formula (6), s = 1 to 30 and t = 1 to 3).

(C) phenolic curing agent

- Phenol novolac resin: manufactured by UBE Corporation, "H-4" (phenolic hydroxyl equivalent: 110)

(D) black pigment

- Carbon-based black pigment: manufactured by Mitsubishi Chemical Corporation, "Mitsubishi Carbon Black 3230B"

(E) inorganic filling material

- Spherical alumina: manufactured by Denka Co., Ltd., average particle diameter = 15 μm

(F) Other components

(Curing accelerator)

- 2-Phenyl-4-methyl-5-hydroxymethylimidazole: manufactured by Shikoku Chemicals Corporation, "Curezol 2P4MHZ-PW"

(Adhesion-imparting agent)

- Adhesion-imparting agent 1: 3-glycidoxypropyltrimethoxysilane, manufactured by Shin-Etsu Chemical Co., Ltd., "KBM-403"
- Adhesion-imparting agent 2: 3-mercaptopropyltrimethoxysilane, manufactured by Shin-Etsu Chemical Co., Ltd., "KBM-803"

(Mold-releasing agent)

- Carnauba wax: manufactured by Toa Kasei Co., Ltd., "TOWAX-131"

(Flame retardant)

- Flame retardant 1: phosphazene compound, manufactured by Fushimi Pharmaceutical Co., Ltd., "FP-100"
- Flame retardant 2: zinc molybdate-supporting zinc oxide, manufactured by Huber Engineered Materials, "KEMGARD-911B"

(Ion-trapping agent)

- Hydrotalcite compound: manufactured by Kyowa Chemical Industry Co., Ltd., "DHT-4A-2"

[Working Examples 1 and 2, and Comparative Example 1]

The above-mentioned components were blended according to the compositions (parts by mass) shown in Table 1, and were subjected to melt mixing treatment, cooled, and pulverized to obtain compositions. Each of the obtained compositions was evaluated according to the method shown below, and the results are shown in Table 1.

(Melt viscosity)

The minimum melt viscosity was measured with a high-performance flow tester (manufactured by Shimadzu Corporation, CFT-100D) at 175°C with a load of 10 kg.

(Spiral flow)

The measurement was performed using a mold in accordance with the EMMI standard under conditions of a molding temperature of 175°C, a molding pressure of 6.9 N/mm$^2$, and a molding time of 180 seconds.

(Thermal conductivity)

A test piece with a diameter of 50 mm and a thickness of 3 mm was produced under conditions of a molding temperature of 175°C, a molding time of 180 seconds, and a molding pressure of 6.9 MPa. The test piece was post-cured at 180°C for 4 hours, and the thermal conductivity was then measured with a steady-state thermal conductivity measuring apparatus (manufactured by Advance Riko, Inc., GH-1).

(Breakdown voltage)

A test piece with a diameter of 90 mm and a thickness of 1 mm was produced under conditions of 175°C, for 180 seconds, and a molding pressure of 6.9 MPa. The test piece was post-cured at 180°C for 4 hours, and the breakdown voltage was then measured in accordance with the method described in JIS C 2110-1: 2010.

(Adhesion)

A test piece having a truncated cone shape with a top diameter of 3 mm, a bottom diameter of 3.568 mm, and a height of 3 mm was produced using a copper frame by molding at 175°C for 2 minutes. The obtained test piece was post-cured at 180°C for 4 hours, and shear adhesion was measured. The average of shear adhesion of 8 test pieces was determined as the adhesion.

(Bending elastic modulus)

A resin composition was cast in a mold in accordance with JIS K 6911:2006 and was produced into a test piece under conditions of 175°C, for 180 seconds, and a molding pressure of 6.9 MPa. The test piece was post-cured at 180°C for 4 hours. The bending elastic modulus of the obtained test piece was measured at room temperature (25°C) in accordance with JIS K 6911: 2006.

(Fracture toughness value $K_{1C}$)

Each composition was transfer-molded under conditions of 175°C, for 120 seconds, and a molding pressure of 6.9 MPa based on the ASTM E399 standard and was then post-cured at 180°C for 4 hours to produce a three-point bending test piece notched as shown in FIG. 1 (perspective view) and FIG. 2 (partially enlarged view). The test piece was subjected to a fracture test using autography at 250°C, and the value of fracture toughness value ($K_{1C}$) was determined from the fracture toughness (Pc) by the following equation.

$$K_{1C} = \frac{3Pc \times S \times a^{1/2}}{2B \times W^2}$$

Pc: fracture toughness
S: distance between supporting points
a: notch length
B: test piece width
W: test piece thickness

(Weight change after being left at high temperature)

Each composition was transfer-molded under conditions of 175°C, for 120 seconds, and a molding pressure of 6.9 MPa and then post-cured at 180°C for 4 hours to obtain a test piece of 10 × 100 × thickness 4 mm. The test piece was stored in an oven of 250°C for 336 hours. The rate (%) of weight reduction by storage was measured based on the weight of the test piece before the storage.

(Temperature cycling test)

Wire bonded chips were sealed by the following conditions and were subjected to a temperature cycling test.

[Test conditions]

A chip of 6 mm × 6 mm, a DA agent manufactured by Ablestick Corporation, 84-1LMI-SR4, and a 100 pin QFP lead frame made of a Cu alloy (Olin C7025) whose die pad portion (8 mm × 8 mm) and wire bonding portion were plated with Ag were transfer-molded from the respective compositions under conditions of 175°C, for 120 seconds, and a molding pressure of 6.9 MPa, and then post-cured at 180°C for 4 hours and thereby sealed. The tie bar was cut with a lead frame cutter to obtain a QFP package with 20 mm × 14 mm × thickness 2.7 mm. This package was subjected to a temperature cycling test 500 times, with one cycle consisting of 30 minutes at -50°C and 30 minutes at 150°C, and package cracking was verified.
When no cracking was observed, the package was determined as Good, and when cracking occurred, the package was determined as Poor.
It can be confirmed that a composition that does not cause cracking of the resin and breaking of wire under the conditions above is a suitable material even when used as a motor-sealing resin.

Table 1

| | | Working Example 1 | Working Example 2 | Comparative Example 1 |
|---|---|---|---|---|
| Epoxy resin | YX-4000K | 40.8 | 53.0 | 64.0 |
| | EOCN 1027 | 12.2 | | |
| Copolymer | Compound A | 12.8 | 12.8 | |
| Phenolic curing agent | H-4 | 34.2 | 34.2 | 36.0 |
| Black pigment | Mitsubishi Carbon Black 3230B | 3.0 | 3.0 | 3.0 |
| Inorganic filling material | Spherical alumina | 1571.4 | 1571.4 | 1571.4 |
| Curing accelerator | Curezol 2P4MHZ-PW | 4.0 | 4.0 | 4.0 |
| Adhesion-imparting agent | Adhesion-imparting agent 1 (KBM-403) | 1.0 | 1.0 | 1.0 |
| | Adhesion-imparting agent 2 (KBM-803) | 0.5 | 0.5 | 0.5 |
| Mold-releasing agent | TOWAX-131 | 8.0 | 8.0 | 8.0 |

(continued)

| | | Working Example 1 | Working Example 2 | Comparative Example 1 |
|---|---|---|---|---|
| Flame retardant | Flame retardant 1 (FP-100) | 8.0 | 8.0 | 8.0 |
| | Flame retardant 2 (KEMGARD-911B) | 5.0 | 5.0 | 5.0 |
| Ion-trapping agent | DHT-4A-2 | 2.0 | 2.0 | 2.0 |
| Melt viscosity [Pa·s] | | 40 | 35 | 20 |
| Spiral flow [cm] | | 100 | 110 | 130 |
| Heat conductivity [W/mK] | | 5.0 | 5.0 | 5.0 |
| Breakdown voltage [kV/mm] | | 15 | 15 | 15 |
| Adhesion [MPa] | | 10 | 10 | 9 |
| Bending elastic modulus [MPa] | | 42,000 | 42,500 | 50,000 |
| Fracture toughness value $K_{1C}$ [$MPa \cdot m^{1/2}$] | | 0.74 | 0.70 | *0.55* |
| Weight reduction rate [%] after 336 hours at 250°C | | 0.9 | 1.0 | 2.0 |
| Temperature cycling test | | Good | Good | Poor |

As described above, the sealing composition of the present invention has excellent toughness, low elastic modulus, and thermal conductivity while maintaining fluidity and electrical properties. Accordingly, the sealing composition of the present invention is suitable as a sealing resin for a high output motor that requires high heat dissipation.

## Claims

1. A motor-sealing resin composition for sealing a part or the whole of parts constituting a motor, comprising the components (A), (B), (C), (D), and (E) defined as:

   (A) an epoxy resin in an amount of 20 to 60 parts by mass with respect to the total 100 parts by mass of the components (A), (B) and (C);
   (B) a hydrosilylation reaction product of an alkenyl group-containing epoxy compound and any one of organopolysiloxanes represented by formulae (1) to (3), as defined below, and having one or more hydrosilyl groups in one molecule, said hydrosilylation reaction product (B) being in an amount of 2 to 25 parts by mass with respect to the total 100 parts by mass of the components (A), (B), and (C);

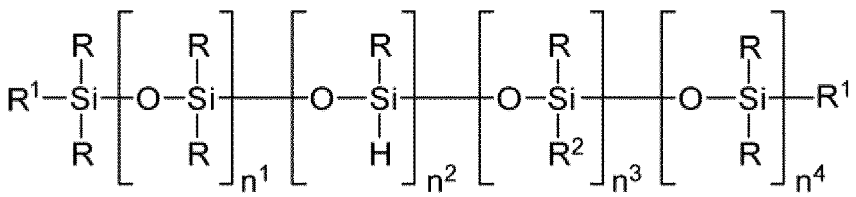

(1)

wherein, in formula (1), Rs are independently a monovalent hydrocarbon group having 1 to 10 carbon atoms, $R^1$s are independently a hydrogen atom or a monovalent hydrocarbon group having 1 to 10 carbon atoms, $R^2$s are independently a group represented by formula (1') as defined below, $n^1$ is a number from 5 to 200, $n^2$ is a number from 0 to 2, $n^3$ is a number from 0 to 10, and $n^4$ is 0 or 1, provided that one or more of $R^1$s are hydrogen atoms,

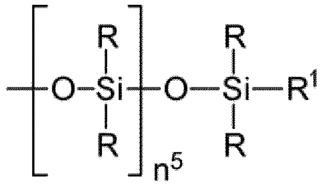

(1')

wherein, in formula (1'), Rs are independently a monovalent hydrocarbon group having 1 to 10 carbon atoms, $R^1$s are independently a hydrogen atom or a monovalent hydrocarbon group having 1 to 10 carbon atoms, and $n^5$ is a number from 1 to 10),

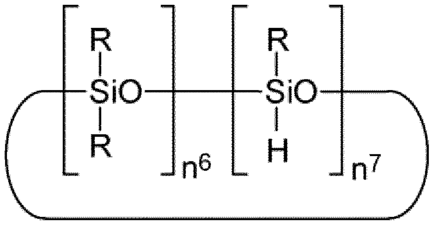

(2)

wherein, in formula (2), Rs are independently a monovalent hydrocarbon group having 1 to 10 carbon atoms, $n^6$ is a number from 1 to 10, and $n^7$ is 1 or 2, provided that $n^6 + n^7$ is a number from 3 to 12,

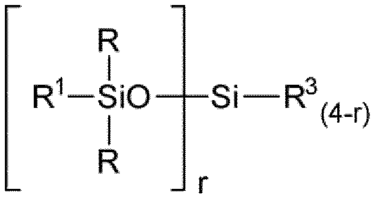

(3)

wherein, in formula (3), Rs are independently a monovalent hydrocarbon group having 1 to 10 carbon atoms, $R^1$s are independently a hydrogen atom or a monovalent hydrocarbon group having 1 to 10 carbon atoms, r is a number from 0 to 3, and $R^3$ is a hydrogen atom or one or more groups selected from the group consisting of alkyl groups having 1 to 10 carbon atoms and alkoxyalkyl groups having 2 to 10 carbon atoms, wherein at least one of $R^1$s and $R^3$ is a hydrogen atom;

(C) a phenolic curing agent in an amount of 20 to 50 parts by mass with respect to the total 100 parts by mass of the components (A), (B), and (C);
(D) a black pigment in an amount of 0.5 parts by mass or more with respect to the total 100 parts by mass of the components (A), (B), and (C); and
(E) an inorganic filling material in an amount of 100 to 2,000 parts by mass with respect to the total 100 parts by mass of the components (A), (B), and (C) with the proviso that the black pigment (D) is excluded from the component (E).

**2.** The motor-sealing resin composition according to claim 1, wherein the component the inorganic filling material (E) includes one or more selected from the group consisting of alumina, aluminum nitride, boron nitride, magnesium oxide, silicon carbide, silicon nitride, and diamond.

**3.** The motor-sealing resin composition according to claim 1, wherein the inorganic filling material (E) has a volume-average particle diameter of 3 to 40 $\mu$m.

**4.** The motor-sealing resin composition according to claim 1, wherein the epoxy resin (A) includes one or more selected from the group consisting of a novolac type epoxy resin, an aralkyl type epoxy resin, and a crystalline epoxy resin.

**5.** The motor-sealing resin composition according to claim 1, wherein the part constituting the motor is a rotor.

FIG.1A

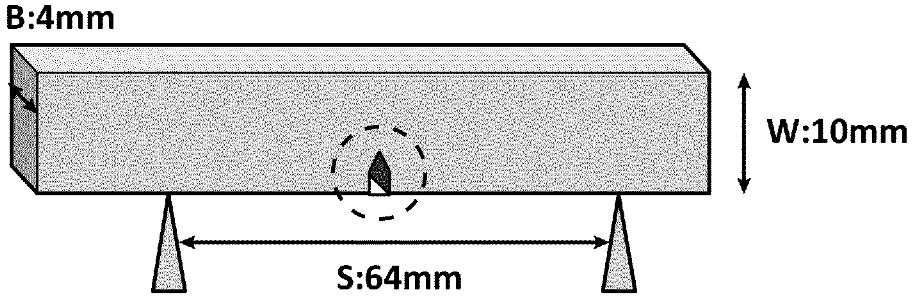


FIG.1B

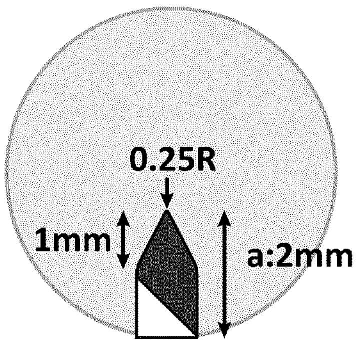

Europäisches Patentamt
European Patent Office
Office européen des brevets

# EUROPEAN SEARCH REPORT

Application Number
EP 25 18 1632

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| A | JP 7 444345 B1 (SUMITOMO BAKELITE CO [JP]) 6 March 2024 (2024-03-06)<br>* the whole document *<br>& EP 4 583 371 A1 (SUMITOMO BAKELITE CO [JP]) 9 July 2025 (2025-07-09)<br>* claims 1-13 *<br>* comparative examples 1 and 2; table 1 *<br>----- | 1-5 | INV.<br>C08G59/62<br>C08G77/14 |
| A | EP 3 483 217 A1 (SHINETSU CHEMICAL CO [JP]) 15 May 2019 (2019-05-15)<br>* claims 1-5 *<br>* examples 1-4; table 1 *<br>* synthesis examples 1 and 2 *<br>----- | 1-5 | |
| A | US 2016/251511 A1 (OSADA SHOICHI [JP] ET AL) 1 September 2016 (2016-09-01)<br>* claims 1-4 *<br>* examples 1-9; table 1 *<br>* paragraph [075-] *<br>----- | 1-5 | |
| | | | TECHNICAL FIELDS SEARCHED (IPC) |
| | | | C08G |

The present search report has been drawn up for all claims

| Place of search | Date of completion of the search | Examiner |
| --- | --- | --- |
| The Hague | 17 October 2025 | Mensah, Laure |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 18 1632

This annex lists the patent family members relating to the patent documents cited in the above-mentioned European search report. The members are as contained in the European Patent Office EDP file on
The European Patent Office is in no way liable for these particulars which are merely given for the purpose of information.

17-10-2025

| Patent document cited in search report | Publication date | Patent family member(s) | Publication date |
|---|---|---|---|
| JP 7444345 B1 | 06-03-2024 | CN 119790579 A | 08-04-2025 |
| | | EP 4583371 A1 | 09-07-2025 |
| | | JP 7444345 B1 | 06-03-2024 |
| | | JP WO2024048369 A1 | 07-03-2024 |
| | | KR 20250058753 A | 30-04-2025 |
| EP 3483217 A1 | 15-05-2019 | EP 3483217 A1 | 15-05-2019 |
| | | JP 2019085534 A | 06-06-2019 |
| | | US 2019144704 A1 | 16-05-2019 |
| US 2016251511 A1 | 01-09-2016 | CN 105924899 A | 07-09-2016 |
| | | JP 6300744 B2 | 28-03-2018 |
| | | JP 2016160317 A | 05-09-2016 |
| | | KR 20160105323 A | 06-09-2016 |
| | | US 2016251511 A1 | 01-09-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021013034 A
- JP 2021031600 A
- JP 2020117688 A